# EUROPEAN PATENT SPECIFICATION

(11) **EP 2 495 852 B1**
(45) Date of publication and mention of the grant of the patent: **16.08.2017**
(21) Application number: 10826304.7
(22) Date of filing: 22.10.2010
(51) Int. Cl.: H02K 49/04, H02K 7/102

(54) **EDDY-CURRENT BRAKE**
WIRBELSTROMBREMSE
FREIN À COURANTS DE FOUCAULT

(30) Priority: 28.10.2009 JP 2009247732
(43) Date of publication of application: 05.09.2012
(73) Proprietor: Nippon Steel & Sumitomo Metal Corporation, Tokyo 100-8071 (JP)
(72) Inventor: SAITO, Akira, Tokyo 100-8071 (JP); TASAKA, Masahiro, Tokyo 100-8071 (JP); NOGUCHI, Yasutaka, Tokyo 100-8071 (JP); IMANISHI, Kenji, Tokyo 100-8071 (JP)
(74) Representative: Zimmermann & Partner Patentanwälte mbB
(86) International application number: PCT/JP2010/006252
(87) International publication number: WO 2011/052167

(56) References cited:
- EP-A1- 1 837 555
- EP-A1- 1 912 313
- EP-A1- 2 521 251
- JP-A- 4 331 456
- JP-A- 2006 340 428
- JP-A- 2007 037 305
- JP-A- 2008 039 169
- JP-A- 2008 039 169
- JP-U- H0 580 178
- JP-U- H0 580 178
- US-A1- 2010 084 230

## Description

### TECHNICAL FIELD

The present invention relates to an eddy current speed reducer using permanent magnets, and specifically relates to an eddy current speed reducer suited to a small- to mid-size bus, truck or the like which is not especially equipped with a compressed air tank or the like.

### BACKGROUND ART

In large vehicles such as trucks and buses, in addition to foot brakes (friction brakes), which are the main brakes, engine braking and exhaust braking are used as auxiliary brakes. In recent years, a reduction of an amount of exhaust in vehicle engines has been promoted and resulted in decreasing the ability of engine braking and exhaust braking; therefore, an eddy current speed reducer (hereinafter referred to simply as "speed reducer") is often installed to augment auxiliary braking.

Speed reducers are generally classified into systems using electromagnets and systems using permanent magnets to cause a magnetic field for producing a braking force to be generated; however, those of permanent magnet type without requiring energizing for braking have recently become mainstream.

For example, a general configuration of a speed reducer of a permanent magnet system installed in a large-size vehicle is disclosed in Patent Literature 1. The speed reducer disclosed in the same literature is configured such that a rotor of drum shape is fixed as a braking member to a rotation shaft such as a propeller shaft, a ring member to which a plurality of permanent magnets are installed circumferentially is disposed inside this rotor, and switching between braking and non-braking is performed by causing the ring member to move to a predetermined position.

Usually, in a large-size vehicle, a compressed air tank that stores compressed air is equipped since compressed air is used as a source of power to drive various devices. As a result, for the speed reducer installed in large-size vehicles, a pneumatic actuator that uses compressed air from the compressed air tank as a source of power is adopted as the driving device to cause the ring member retaining the permanent magnets to move in order to switch between braking and non-braking.

However, augmenting the capability of the auxiliary braking has been demanded not only for large-size vehicles, but also for small- to mid-size trucks, buses and the like, and thus the demand for installing a speed reducer of a permanent magnet system that is smaller and lighter than conventional ones has been growing.

However, these small- to mid-size vehicles often are not equipped with a compressed air tank. As a result, compressed air cannot be used as the source of power to cause the ring member to move when switching between braking and non-braking, and thus a pneumatic actuator cannot be adopted in the speed reducer installed in small-to mid-size vehicles.

In addition to this, with the speed reducer disclosed in Patent Literature 1, since the stroke of the actuator causing the ring member to move between a braking position and a non-braking position is large, and the required force therefor also is high, the size of the actuator inevitably becomes large, and it is difficult to realize the reduction in the size of the speed reducer required for installation in a small- to mid-size vehicle.

As a technology dealing with these problems, for example, speed reducers that perform switching between braking and non-braking without causing a ring member, to which permanent magnets are installed circumferentially, to move are proposed in Patent Literature 2 and 3. The speed reducers proposed in the same literatures have configurations in which a drum-shaped rotor is fixed as a braking member to a rotation shaft, a support ring, to which a plurality of permanent magnets are adhered to the outer circumferential surface, is rotatably supported by the rotation shaft via bearings at the interior of this rotor, and further, a brake disk is mounted to the support ring and a switch brake is provided to this brake disk.

According to the speed reducers proposed in Patent Literature 2 and 3, a state of non-braking is when the switch brake is not in operation, wherein in association with the rotation of the rotor along with the rotation shaft, the support ring rotates synchronously integrally with the rotor by way of the magnetic attraction action between the permanent magnets and the rotor, with a result of the braking force being not generated.

On the other hand, during braking, brake pads are pressed against the brake disk rotating integrally with the support ring, and the rotation of the support ring is made to stop by causing the actuator, which configures the switch brake, to operate. Thus, eddy current generates at the inner circumferential surface of the rotating rotor by the action of the magnetic field from the permanent magnets of the halted support ring, whereby a braking force generates at the rotor.

With the speed reducers proposed in Patent Literature 2 and 3, since a disk brake is adopted in the switch brake to switch between braking and non-braking, the stroke of the actuator can be reduced and a reduction in the size of the speed reducer can be expected.

However, there is a growing demand for performance enabling output of torque to be higher than the braking force generated by eddy current, and enabling the rotation of the support ring to be stopped quickly. With the speed reducers proposed in Patent Literature 2 and 3, a hydraulic actuator with oil or compressed air as the source of power is adopted as the actuator, which configures the switch brake, in order to meet this demand.

As a result, the speed reducers proposed in Patent Literature 2 and 3 require a compressed air tank in using compressed air as the source of power of the switch brake, and require a hydraulic system and a piping system in using oil, and thus it is difficult to install the speed reducers in a small- to mid-size vehicle which is not specially equipped with these.

Patent Literature 4 provides an electromechanical linear-motion actuator taht includes a rotary shaft driven by an electric motor and having a radially outer surface, a stationary outer race member provided around the rotary shaft and having a radially inner surface, a plurality of planetary rollers disposed between the radially outer surface of the rotary shaft and the radially inner surface of the outer race member so as to be rotated about their own axes while revolving about the axis of the rotary shaft when the rotary shaft rotates, wherein a helical rib is provided on the radially inner surface of the outer race member or the radially outer surface of the rotary shaft, and wherein a helical groove or circumferential grooves are formed in a radially outer surface of each of the planetary rollers in which the helical rib is engaged, a planetary carrier axially facing the planetary rollers, and thrust ball bearings disposed between the planetary carrier and the respective planetary rollers for preventing the rotation of the respective planetary rollers from being transmitted to the planetary carrier, wherein each of said thrust ball bearings includes a raceway formed on an axial end surface of the corresponding planetary roller.

According to Patent Literature 5, in an actuator of the type in which a plurality of planetary rollers disposed between the rotor shaft of an electric motor and an outer ring member fixed in position around the outer periphery of the rotor shaft are rotated about the axis of the rotor shaft and also about their own axes, thereby converting the rotary motion of the rotor shaft to the linear motion of the planetary rollers 4a helical groove is formed in the radially outer surface of each planetary roller in which a helical rib formed on the radially inner surface of the outer ring member is received. The helical groove has a pitch equal to that of the helical rib and a lead angle different from that of the helical rib.

According to Patent Literature 6, a plurality of planetary rollers are disposed between the radially outer surface of a rotor shaft of an electric motor and the radially inner surface of an outer ring member fixed in position around the rotor shaft so as to be rotatable about the rotor shaft and about their own axes when the rotor shaft rotates. A helical rib is defined by a rib member engaged in a helical groove formed in the radially inner surface of the outer ring member. The helical rib is engaged in circumferential grooves formed in the radially outer surface of each planetary roller at the same pitch as the turns of the helical rib.

According to Patent Literature 7, a carrier supporting planetary rollers includes a partial cylindrical part divided to three circular parts axially protruded between planetary rollers, and a guide face for guiding inner diameter-side upper surface of a spiral protruding part formed of a linear member fixed to the spiral groove on the inner diameter surface of the outer ring member is formed on the outer diameter surface of each circular part.

### CITATION LIST

### PATENT LITERATURE

PATENT LITERATURE 1: Japanese Patent Application Publication No. H4-12659
PATENT LITERATURE 2: Japanese Patent Application Publication No. H4-331456
PATENT LITERATURE 3: Japanese Utility Model Application Publication No. H5-80178
PATENT LITERATURE 4: US 2010/084230 A1
PATENT LITERATURE 5: EP 1 912 313 A1
PATENT LITERATURE 6: EP 1 837 555 A1
PATENT LITERATURE 7: JP 2008 039169

### SUMMARY OF INVENTION

### TECHNICAL PROBLEM

The present invention has been made taking the above-mentioned problems into account, and has an object of providing an eddy current speed reducer that can realize a reduction in size, and is able to be installed even in a small- to medium-sized bus, truck or the like not especially equipped with a compressed air tank or the like, and/or is able to mitigate shock caused by a switch break.

### SOLUTION TO PROBLEM

As a result of conducting a thorough investigation to achieve the above-mentioned objects, the present inventors has found that adopting a brake disk using an electric linear actuator as the switch brake to switch between braking and non-braking is effective to achieve both realizing a reduction in size as well as installing in small- to mid-size vehicles which are not especially equipped with a compressed air tank or the like, thereby completing the present invention.

An eddy current speed reducer of the present invention includes: a brake disk that is fixed to a rotational shaft of a vehicle; permanent magnets that are disposed not only oppositely relative to a principal surface of the brake disk but also circumferentially in such a manner that each magnet is magnetized in reverse polarity to adjacent ones; a rotation member that retains the permanent magnets, has a switch brake disk, and is rotatably supported by the rotation shaft; a switch brake caliper that has brake pads sandwiching the switch brake disk therebetween and is fixed to an irrotational portion of the vehicle; and an electric linear actuator that causes the brake pads to be linearly driven by converting rotational motion of the electric motor into linear motion.

In the above-mentioned speed reducer, it is preferable that the electric linear actuator is configured such that: a plurality of planetary rollers are interposed between an outer circumferential surface of a rotor shaft, which rotates integrally with a main shaft of the electric motor, and an inner circumferential surface of an outer race member that concentrically surrounds the rotor shaft, and each of the planetary rollers revolves while rotating around the rotor shaft as a result of the rotation of the rotor shaft; while allowing a spiral convex zone to be disposed on the outer circumferential surface of the rotor shaft or on the inner circumferential surface of the outer race member, provided on an outer circumferential surface of each of the planetary rollers is a circumferential groove system, which has the same pitch as the spiral convex zone and meshes with the spiral convex zone, or a spiral groove system, which has the same pitch as the spiral convex zone and a lead angle different from that of the spiral convex zone and meshes with the spiral convex zone, whereby each of the planetary rollers revolves while rotating around the rotor shaft as a result of the rotation of the rotor shaft and simultaneously moves in an axial direction so that the brake pads are linearly driven as a result of the movement in the axial direction of each of the planetary rollers.

In addition, in the above-mentioned speed reducers, the switch brake caliper is fixed to the irrotational portion of the vehicle via a buffering material.

### ADVANTAGEOUS EFFECTS OF INVENTION

According to the eddy current speed reducer of the present invention, the length of the stroke of the actuator used to cause the disk brake to be driven can be decreased because of adopting a disk brake for the switch brake that switches between braking and non-braking, and thus makes it possible to realize a size reduction in the speed reducer. Furthermore, the speed reducer of the present invention can be easily installed even in a small- to medium-sized vehicle which is not especially equipped with a compressed air tank or the like because of using an electric linear actuator which is operable electrically to switch between braking and non-braking.

### BRIEF DESCRIPTION OF DRAWINGS

FIG. 1 is a longitudinal sectional view showing a configuration example of an eddy current speed reducer of the present invention;
FIG. 2 is a view showing a configuration example of an electric linear actuator suited to the eddy current speed reducer of the present invention, with FIG. 2(a) showing a longitudinal sectional view and FIG. 2(b) showing a cross-sectional view along A-A of FIG. 2(a), respectively;
FIG. 3 is a schematic diagram showing one example of a mitigation measure in the structure against a shock generated by the switch brake;
FIG. 4 is a schematic diagram showing another example of a mitigation measure in the structure against a shock generated by the switch brake;
FIG. 5 is a schematic diagram showing yet another example of a mitigation measure in the structure against a shock generated by the switch brake;
FIG. 6 is a time chart illustrating an example of a mitigation measure in control against a shock generated by the switch brake in case the actuator has a sustaining function;
FIG. 7 is a schematic diagram showing a relationship between torque and the difference in rotational speed between a brake disk and a rotational member, in order to ascertain the suitable pressing force of the actuator; and
FIG. 8 is a time chart illustrating an example of a mitigation measure in control against a shock generated by the switch brake in case the actuator does not have a sustaining function.

### DESCRIPTION OF EMBODIMENTS

Hereinafter, an embodiment of an eddy current speed reducer of the present invention will be explained in detail.

### 1. Basic Configuration of Eddy Current Speed Reducer

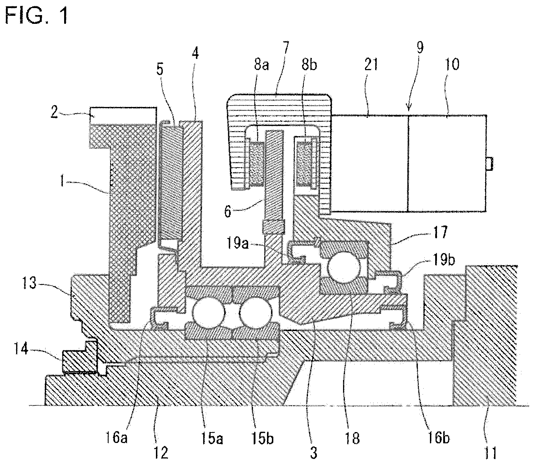

FIG. 1 is a longitudinal sectional view showing a configuration example of the eddy current speed reducer of the present invention. The eddy current speed reducer of the present invention is of permanent magnet type, and includes a brake disk 1, a rotational member 3 that retains permanent magnets 5 and has a switch brake disk 6, a switch brake caliper 7 having brake pads 8a, 8b that sandwich the switch brake disk 6 therebetween, and an electric linear actuator 9 that drives the switch brake caliper 7, as shown in the same figure.

The brake disk 1 is in the form of a rotor serving as a braking member, and is configured so as to rotate integrally with a rotation shaft 11 such as a propeller shaft. More specifically, a connecting shaft 12 is fixed by bolts or the like coaxially with the rotation shaft 11, and a sleeve 13 with a flange is inserted while engaging by splines to the connecting shaft 12 and is fixed by a nut 14. The brake disk 1 is fixed by bolts or the like to the flange of the sleeve 13 thus integrated with the rotation shaft 11, and is thereby made so as to rotate integrally with the rotation shaft 11.

Radiator fins 2 are provided at the outer circumference of the brake disk 1. These radiator fins 2 are integrally formed with the brake disk 1. A ferromagnetic material such as iron or a weakly magnetic material such as ferritic stainless steel can be used for the brake disk 1.

The rotational member 3 serves as a stator for causing a braking force to be generated at the brake disk 1, which serves as a rotor, and is configured to be rotatable relative to the rotation shaft 11. More specifically, the rotational member 3 is a ring-shaped member as being concentric with the connecting shaft 12, and is supported by the sleeve 13, which is integrated with the rotation shaft 11, via bearings 15a, 15b, thereby allowing free rotation relative to the rotation shaft 11 possible. Lubricating grease is filled into the bearings 15a, 15b, and this lubricating grease is prevented from leaking out by seal members 16a, 16b of ring shape installed at both front and back ends of the rotational member 3.

The rotational member 3 has a magnet support disk 4 that retains the permanent magnets 5 in facing relation relative to the principal surface of the brake disk 1. This magnet support disk 4 may be integrally formed with the rotational member 3, or may be formed separately and fixed to the rotational member 3 by bolts or the like. A plurality of permanent magnets 5, which are disposed circumferentially, are fixed to the magnet support disk 4 at a surface opposing the principal surface of the brake disk 1. The permanent magnets 5 are disposed so that the polarities of adjacent magnets alternately differ (N pole, S pole).

Furthermore, the rotational member 3 has a switch brake disk 6 behind the magnet support disk 4. The switch brake disk 6 is mounted to rotational member 3 by bolts or the like to be integrated with the rotational member 3.

The switch brake caliper 7 has a pair of brake pads 8a, 8b disposed at the front and back, and is extendedly mounted to a bracket 17 by way of bolts or the like equipped with springs, in a state in which the switch brake disk 6 is disposed between the brake pads 8a, 8b with a predetermined gap therebetween. This bracket 17 is mounted to an irrotational portion of the vehicle such as the chassis or cross member as described in detail later.

In addition, the bracket 17 shown in FIG. 1 encircles the rotational member 3 behind the switch brake disk 6, and is rotatably supported by the rotational member 3 via a bearing 18. Lubricating grease is also loaded into this bearing 18, and this lubricating grease is prevented from leaking out by way of seal members 19a, 19b of ring shape installed at both front and back ends of the bracket 17.

The electric linear actuator 9 is fixed by bolts or the like to the switch brake caliper 7. The electric linear actuator 9 uses electrical current supplied to an electric motor 10 as a source of power, and converts the rotational motion of the electric motor 10 into linear motion to cause the brake pad 8b on the back side to be linearly driven toward the switch brake disk 6. The brake pad 8b on the back side thereby presses the switch brake disk 6, and by action of the counterforce incurred by the pressing, the brake pad 8a on the front side moves toward the switch brake disk 6, with a result that the switch brake disk 6 can be powerfully sandwiched by the brake pads 8a, 8b on the front and back sides thereof.

According to the speed reducer of such a configuration, a state of non-braking is when the electric motor 10 is not energized and the electric linear actuator 9 is not made to operate. At this time, the rotational member 3 rotates integrally synchronously with the brake disk 1 by way of the magnetic attraction action between the permanent magnets 5 retained by the magnet support disk 4 integral with the rotational member 3 and the brake disk 1, accompanying the rotation of the brake disk 1 as being integrated with the rotation shaft 11. At this time, braking force is not generated since a difference in the relative rotational speed does not occur between the brake disk 1 as a rotor, and the permanent magnets 5 of the rotational member 3 as a stator.

On the other hand, during braking, the electric motor 10 is energized to cause the electric linear actuator 9 to operate. The switch brake disk 6 rotating as being integrated with the rotational member 3 is thereby sandwiched by the brake pads 8a, 8b, and the rotation of the rotational member 3 can be quickly made to stop. If only the rotational member 3 stops when the brake disk 1 is rotating, a difference in the relative rotational speed will occur between the brake disk 1 as a rotor and the permanent magnets 5 of the rotational member 3 as a stator, eddy current is generated at the principal surface of the brake disk 1 by action of the magnetic field from the permanent magnets 5, and braking force on the rotation shaft 11 can be generated via the brake disk 1.

In this way, the speed reducer of the present invention can decrease the stroke of the actuator, which is used to cause the disk brake to be driven, since a disk brake is adopted as the switch brake that switches between braking and non-braking, and thus makes it possible to realize a size reduction in the speed reducer. Furthermore, the speed reducer of the present invention can be easily installed even in a small- to mid-size vehicle that is not especially equipped with a compressed air tank or the like, because an electric linear actuator driven by electric current as the source of power is used to switch between braking and non-braking.

Furthermore, with the speed reducer of the present invention, since the permanent magnets are fixed to the surface of the magnetic retention disk, which is integral with the rotational member, as being opposite the principal surface of the brake disk, the manufacture of the permanent magnets can be carried out easily, compared to a configuration in which the permanent magnets are fixed to the outer circumferential surface of a support ring as in conventional speed reducers, and thus a cost reduction can be realized. This is because, although it is necessary to process the permanent magnets used in a conventional speed reducer in a curved surface shape following the outer circumferential surface of the support ring, the permanent magnets used in the speed reducer of the present invention are in the form of plane, which is easy to be processed.

### 2. Configuration of Electric Linear Actuator

In the speed reducer of the present invention, an actuator of a ball screw mechanism or a ball ramp mechanism can be adopted as the electric linear actuator to switch between braking and non-braking. An electric linear actuator of a ball screw mechanism or ball ramp mechanism converts the rotational motion of the electric motor into linear motion by way of a motion conversion mechanism causing the ball to follow the screw thread having a lead or a sloped cam surface.

However, although the electric linear actuator of a ball screw mechanism or the like has a function of multiplying the driving force of the linear motion to a certain degree, the force multiplying function to quickly stop rotation of the switch brake disk, i.e. the rotational member, may not be able to be sufficiently ensured. The lead angle of the screw or the sloped angle of the cam surface may be reduced to amplify the force multiplying function; however, in case of a ball screw mechanism, the ball diameter becomes small when the lead angle of the screw is reduced, and the load carrying capacity declines. In addition, in case of a ball ramp mechanism, the stroke of the linear motion cannot be sufficiently ensured if the sloped angle of the cam surface is made small.

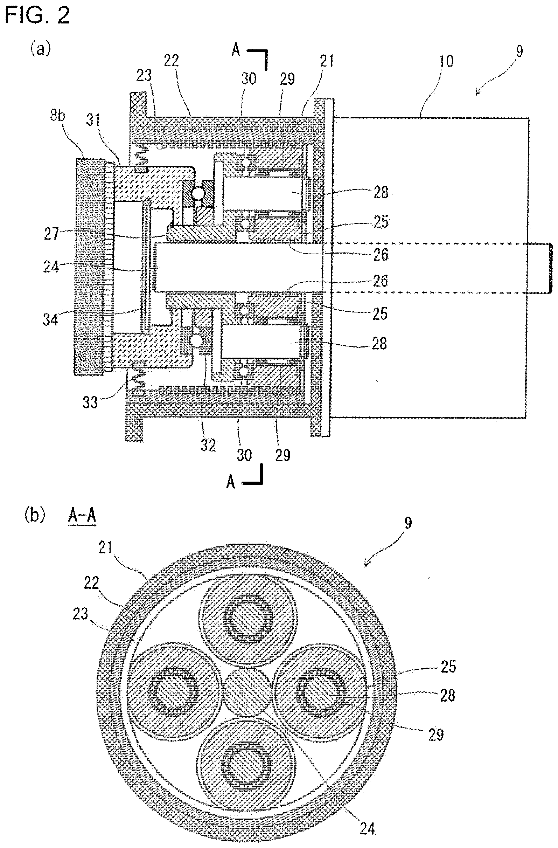

In order to deal with these inadequacies, the speed reducer of the present invention preferably adopts an electric linear actuator that can sufficiently ensure the force multiplying function of the driving force of the linear motion, for example, an electric linear actuator of a planetary roller mechanism as shown in FIG. 2 described below.

FIG. 2 is a figure showing a configuration example of an electric linear actuator suited to the eddy current speed reducer of the present invention, with FIG. 2(a) showing a longitudinal sectional view and FIG. 2(b) showing cross-sectional view along A-A of FIG. 2(a). For the electric linear actuator 9, the outer body thereof is configured by a cylindrical casing 21, and the electric motor 10 is mounted to a back end thereof.

The casing 21 is fixed to the switch brake caliper 7 shown in FIG. 1. An outer race member 22 of cylindrical shape is fit into the casing 21, and a rotor shaft 24 corresponding to the main shaft of the electric motor 10 is disposed at the center thereof. This rotor shaft 24 can be made separately from the main shaft of the electric motor 10 and coupled to the main shaft.

A plurality of planetary rollers 25 of cylindrical shape are disposed between the outer circumferential surface of the rotor shaft 24 and the inner circumferential surface of the outer race member 22. FIG. 2 shows an example in which four planetary rollers 25 are disposed.

The planetary rollers 25 are configured so as to revolve while rotating around the rotor shaft 24, owing to the rotation of the rotor shaft 24 in association with the output of the electric motor 10. More specifically, a carrier member 27 with a flange is disposed onto and encases the rotor shaft 24 and being positioned in front of the planetary rollers 25, and this carrier member 27 rotates along with the rotor shaft 24 while being allowed to move in an axial direction of the rotor shaft 24. Support shafts 28 penetrating the flange of the carrier member 27 and supported by the carrier member 27 are inserted into the planetary rollers 25 respectively, and each of the planetary rollers 25 is rotatably supported by respective support shafts 28 via needle bearings 29, and also rotatably supported relative to the carrier member 27 by ball thrust bearings 30 disposed between the flange of the carrier member 27 and the planetary rollers 25.

According to such a configuration, the carrier member 27 and support shafts 28 rotate about the rotor shaft 24 when the rotor shaft 24 rotates, and each planetary roller 25 is consequently able to revolve while rotating around the rotor shaft 24.

Furthermore, each of the planetary rollers 25 is configured so as to move in an axial direction in association with its revolving motion while rotating around the rotor shaft 24. More specifically, a double-threaded spiral groove system is provided at the inner circumferential surface of the outer race member 22 on which each of the planetary rollers 25 rotatingly contacts, and a ridge part of a rectangular cross section is circumferentially disposedon each thread of the spiral groove system. A double-threaded spiral convex zone 23 is formed on the inner circumferential surface of the outer race member 22 by this ridge part. On the other hand, a single-threaded spiral groove system 26 of trapezoidal cross section, which has the same pitch as the spiral convex zone 23 of the outer race member 22 and a lead angle different from that of the spiral convex zone 23, is provided for the outer circumferential surface of each planetary roller 25.

According to such a configuration, the spiral grooves 26 of each planetary roller 25 mesh with the spiral convex zone 23 of the outer race member 22 so that each of the planetary rollers 25 moves axially during the stage in which the planetary rollers 25 revolve while rotating as a result of the rotation of the rotor shaft 24, allowing the planetary rollers 25 to linearly move. At this time, the amount of linear motion of the planetary roller 25 relative to the amount of rotation of the rotor shaft 24 is defined according to the difference in lead angle between the spiral groove 26 and the spiral convex zone 23. As the difference in the lead angle therebetween is reduced, the amount of linear motion of the planetary roller 25 decreases, with a result that the reduction rate in the linear motion increases and the driving force of the linear motion can be intensified.

In association with the axial movement of each of the planetary rollers 25 which revolves while rotating the other and simultaneously moves in an axial direction, the carrier member 27 along with each of the planetary rollers 25 moves in an axial direction. A linear drive member 31 is supported by the carrier member 27 via the thrust ball bearing 32, and the brake pad 8b as like the one placed on the back side shown FIG. 1, is connected to this linear drive member 31. The linear motion of each of the planetary rollers 25 is thereby transmitted to the linear drive member 31 via the carrier member 27, and the brake pad 8b on the back side can be made to be linearly driven toward the switch brake disk 6.

It should be noted that, for the outer circumferential surface of each of the planetary rollers 25, and the inner circumferential surface of the outer race member 22 and the outer circumferential surface of the rotor shaft 24 contacted by each of the planetary rollers 25, a surface hardening treatment is conducted in order to ensure abrasion resistance, and lubricating grease is filled onto these contact surfaces. In addition, the inside of the casing 21 is sealed by a flexible boot 33 and installed in a gap between the outer circumference of the linear drive member 31 and outer race member 22, and the interior of the linear drive member 31 penetrated by the rotor shaft 24 is sealed by a membranous seal 34.

With the electric linear actuator 9 shown in FIG. 2, the spiral convex zone 23 of the outer race member 22 is double-threaded and the spiral groove 26 of the planetary roller 25 is single-threaded; however, this is because the degree of freedom of setting of the difference in lead angles between the both can be expanded by designing the spiral convex zone 23 to be multiple-threaded. However, the number of threading can be arbitrarily set according to the difference in lead angle to be set for the two, so long as the pitches of the two are the same and the two mesh with each other.

In addition, although, in the electric linear actuator 9 shown in FIG. 2, the spiral convex zone 23 are provided on the inner circumferential surface of the outer race member 22 corresponding to the spiral groove system 26 of the planetary roller 25, spiral convex zone may be provided on the outer circumferential surface of the rotor shaft 24.

Furthermore, although, in the electric linear actuator 9 shown in FIG. 2, the spiral groove system 26 is provided on the outer circumferential surface of the planetary roller 25, the circumferential groove having the same pitch as the spiral convex zone 3 and meshing with the spiral convex zone 23 may be provided instead of the spiral groove system 26.

### 3. Configuration Mitigating Shock caused by Switch Brake

In the speed reducer of the present invention, as described above, a disk brake is adopted as the switch brake to switch between braking and non-braking, and a function of quickly switching from a non-braking state to a braking state is required for this switch brake in order to generate a braking force as an auxiliary brake with superior responsiveness. Due to this requirement, being different from such a disk brake used in a main brake that causes the rotation of a tire to stop in several seconds without immediately locking up the rotation of the tire, the switch brake powerfully sandwiches the switch brake disk with brake pads to cause the rotation of the rotational member to stop in a moment on the order of 1 second at the longest.

In this case, since the rotation of the rotational member rapidly declines as a result of switching from non-braking to braking, an excessive shock is easily imparted to the switch brake caliper by the inertial force of the rotational member, particularly at the moment at which the rotational member stops. This shock is also imparted to the bracket supporting the switch brake caliper and further to irrotational portions of the vehicle supporting the bracket, and may come to be a hindrance to durability.

As a result, in the speed reducer of the present invention, it is preferable to take measures to mitigate the shock caused by the switch brake. Hereinafter, structural measures and control measures that can be applied to the speed reducer of the present invention will be explained in order.

### 3-1. Shock Mitigation Structural Measures

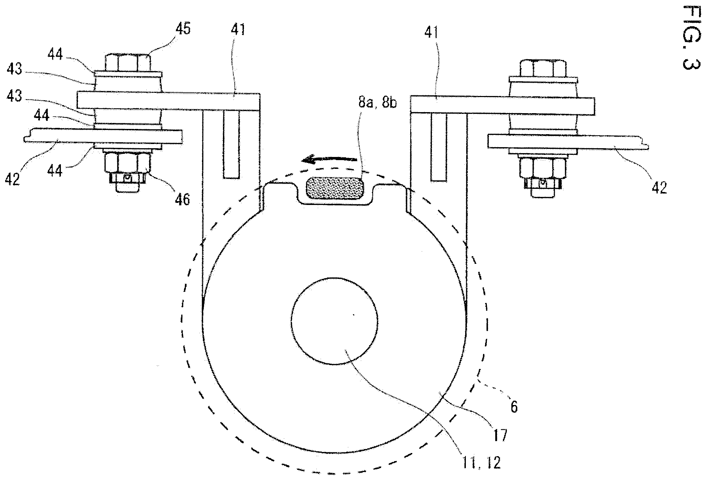

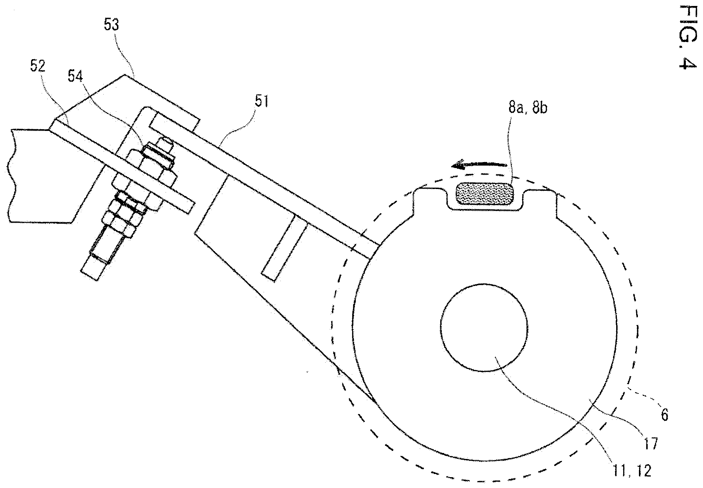

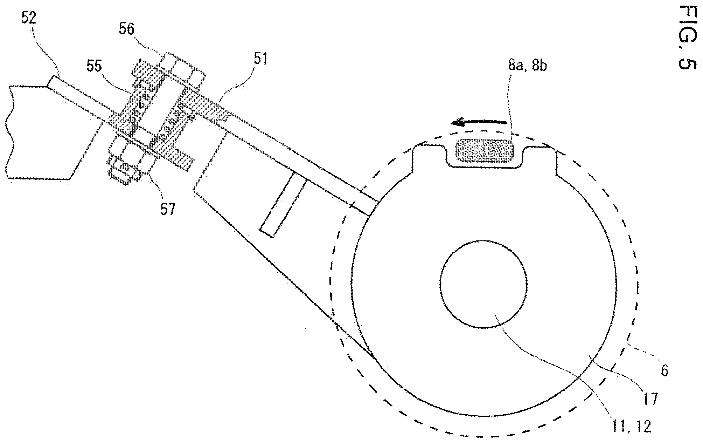

FIG. 3 is a schematic diagram showing an example of structural mitigation measures against a shock by the switch brake. In the same figure, the brake pads 8a, 8b of the switch brake caliper are displayed in a state in which the speed reducer is axially viewed from the front, the switch brake disk 6 of the rotational member (stator) being shown by a dotted line in the spatial relationship with these brake pads 8a, 8b, and the direction of rotation thereof being shown by the arrow. These are similarly shown also in FIG. 4 and FIG. 5 described later.

As shown in FIG. 3, in the bracket 17 supporting the switch brake caliper as well as the brake pads 8a, 8b, arm portions 41 project from left and right side portions, respectively. Each of the arm portions 41 is fixed to a cross member 42 integrated with the vehicle chassis by fastening by means of bolts 45 and nuts 46 via a shock mount bushing 43 and a metal washer 44. The shock mount bushing 43 is made of an elastic material such as rubber or urethane.

According to the configuration shown in FIG. 3, a shock that occurs as a result of the stopping of the switch brake disk 6 (rotational member) during braking can be absorbed and thus mitigated by elastic deformation of the shock mount bushing 43.

FIG. 4 is a schematic diagram showing another example of a structural mitigation measure against a shock by the switch brake, and FIG. 5 is a schematic diagram showing yet another example thereof. As shown in FIG. 4 and FIG. 5, in the bracket 17, an arm portion 51 singly projects from either of left and right side portions. The arm portion 51 is fixed to a stay 52 provided for the vehicle chassis.

With the configuration shown in FIG. 4, a shock absorber 54 with a return function is mounted to the stay 52, and the arm portion 51 abuts a leading end of the shock absorber 54 thereof and is contacted to and supported by a projecting piece 53 of a hook shape that projects from the stay 52. An absorber of orifice type or an absorber of silicon rubber built-in type can be adopted for the shock absorber 54.

With the configuration shown in FIG. 5, the arm 51 is fixed to the stay 52 by fastening by means of a bolt 56 and a nut 57, while a coil spring 55 is disposed between the arm 51 and the stay 52.

According to the configurations shown in FIG.4 and FIG. 5, the shock occurring due to the stopping of the switch brake disk 6 (rotational member) during braking can be absorbed and thus mitigated by the shock absorber 54 and the coil spring 55.

### 3-2. Shock Mitigation Control Measures

In order to mitigate the shock occurring from the stopping of the rotational member (stator) by the switch brake, it is effective to relax the sudden decline in the rotational speed of the rotational member immediately before the stop of the rotational member and suppress the change of rotational speed with time. This can be realized by controlling the electrical current applied to the electric motor. The method of electrical current control of this electric motor differs somewhat depending on whether or not the electric linear actuator has a sustaining function.

During the braking, the actuator is operated by applying electrical current to the electric motor, the brake pads are advanced by the linear motion, and thereby a pressing force is generated on the switch brake disk. The sustaining function of the actuator is a function to maintain the positions of the brake pads and hold the pressing force thus generated when the electrical current application is discontinued. If there is the sustaining function, the brake pads are linearly moved in the opposite direction and retracted by applying opposite electrical current, positive or negative, to the electric motor, whereby the pressing force is released. If there is not the sustaining function, the brake pads are spontaneously retracted by the counterforce of the pressing force when the electric current to the electric motor is discontinued, whereby the pressing force is released.

In case of the actuator of the planetary roller mechanism shown in FIG. 2, for example, the sustaining function of the actuator exhibits when the difference between the lead angles of the spiral groove 26 and the spiral convex zone 23 is set to be small at no more than 0.3°. Also in case of the actuator of a ball screw mechanism or ball ramp mechanism, the sustaining function emerges when the lead angle of the screw or the slope angle of the cam surface is set to be small. The actuator shown in FIG. 2 has a sustaining function, since the difference between the lead angles of the spiral groove 26 and the spiral convex zone 23 is set to be small, and the driving force of the linear motion is increased. Hereinafter, the shock mitigation control measures of the electric motor will be explained for the case where the actuator has the sustaining function and the case without it.

### (1) Case where Actuator has Sustaining Function

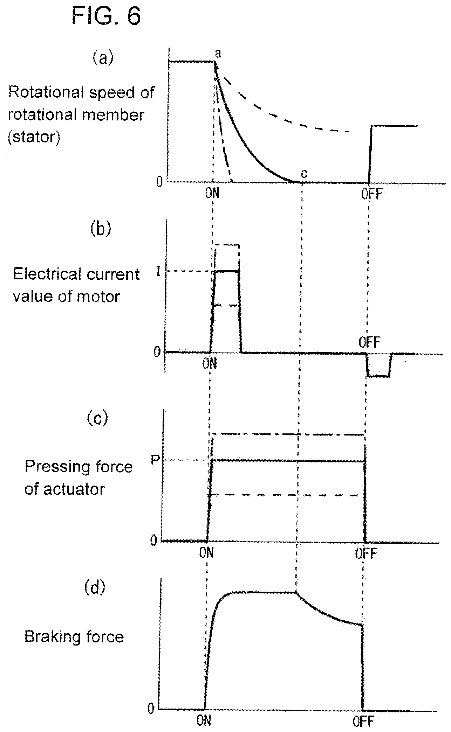

FIG. 6 is a time chart illustrating an example of a mitigation measure in control against a shock caused by the switch brake in case the actuator has a sustaining function, with (a) of the same figure showing the rotational speed of the rotational member (stator), (b) of the same figure showing the value of the applied electrical current to the electric motor, (c) of the same figure showing the pressing force of the actuator, and (d) of the same figure showing the braking force.

As shown by a point "a" in FIG. 6(a), when the rotational member (stator) switches from the non-braking state where it rotates about the rotational shaft of the vehicle and the brake disk (rotor) to the braking state, an electrical current is applied to the electric motor at a predetermined electrical current value I, as shown by the solid line in FIG. 6(b). At this time, an electrical current value I that is suitably applied to the electric motor is set according to the rotational speed of the rotational member at the time that the braking is switched. The actuator thereby operates and the brake pads advance, whereby a pressing force of the actuator is generated against the switch brake disk, as shown by the solid line in FIG. 6(c). As a result of this, the rotational speed of the rotational member declines as shown by the solid line in FIG. 6(a), and a difference in the rotational speed simultaneously occurs between the brake disk and the rotational member. Thus, a braking force generates at the brake disk, as shown in FIG. 6(d).

After the pressing force has reached a predetermined pressing force P, the application of electrical current to the electric motor stops as shown by the solid line in FIG. 6(b). At this time, since the actuator has a sustaining function, the pressing force of the actuator is maintained in the same state, as shown by the solid line in FIG. 6(c). As a result of this, the rotational speed of the rotational member further declines as shown by the solid line in FIG. 6(a), and eventually the rotational member stops as shown by point "c" in FIG. 6(a). Braking force is continually generated at the brake disk by the difference in the rotational speed between the rotational member thus stopped and the brake disc.

When switching from this state to non-braking, reverse electrical current, which is opposite to the electrical current applied to the electric motor during the braking, is applied as shown in FIG. 6(b). The actuator thereby operates and the brake pads retract, whereby the pressing force of the actuator is released as shown in FIG. 6(c) and the non-braking state is entered.

At the time of such switch of the braking, it is important to suitably set the electrical current value applied to the electric motor, in order to responsively perform switching and mitigate the shock occurring as a result of the stopping of the rotational member.

For example, in case of the electrical current value applied to the electric motor being set relatively low as shown by the dashed line in FIG. 6(b), the pressing force of the actuator becomes insufficient as shown by the dashed line in FIG. 6(c). In this case, a change in the rate of rotational decline of the rotational member becomes relaxed as shown by the dashed line in FIG. 6(a), and the rotational member cannot be made to stop in a short time.

In addition, in case of the electrical current value applied to the electric motor being set relatively high as shown by the dashed-dotted line in FIG. 6(b), the pressing force of the actuator increases excessively, as shown by the dashed-dotted line in FIG. 6(c). In this case, the change in the rate of rotational decline of the rotational member increases as shown by the dashed-dotted lined in FIG. 6(a), and the rotational member can be made to stop in an extremely short time. However, the shock becomes significant due to the backlash thereof.

In contrast to these cases, in case of setting the electrical current to be applied to the electric motor to a suitable electrical current value I as shown by the solid line in FIG. 6(b), the pressing force of the actuator becomes the appropriate pressing force P as shown by the solid line in FIG. 6(c). In this case, the rotational speed of the rotational member rapidly declines, and then the change in the rate of rotational decline of the rotational member becomes moderate immediately before the rotational member stops, as shown by the solid line in FIG. 6(a). Switching can thereby be performed responsively, and shock occurring as a result of stopping of the rotational member can be mitigated.

Herein, a pressing force of the actuator, which is able to rapidly decrease the rotational speed of the rotational member, and also relax the change in the rate of rotational decline of the rotational member immediately before the rotational member stops, depends on the rotational speed of the rotational member at the time that the braking is switched. As a result, upon setting an electrical current value suitably applied to the electric motor, it is necessary to ascertain the pressing force that is suitable for every rotational speed of the rotational member at the time that the braking is switched.

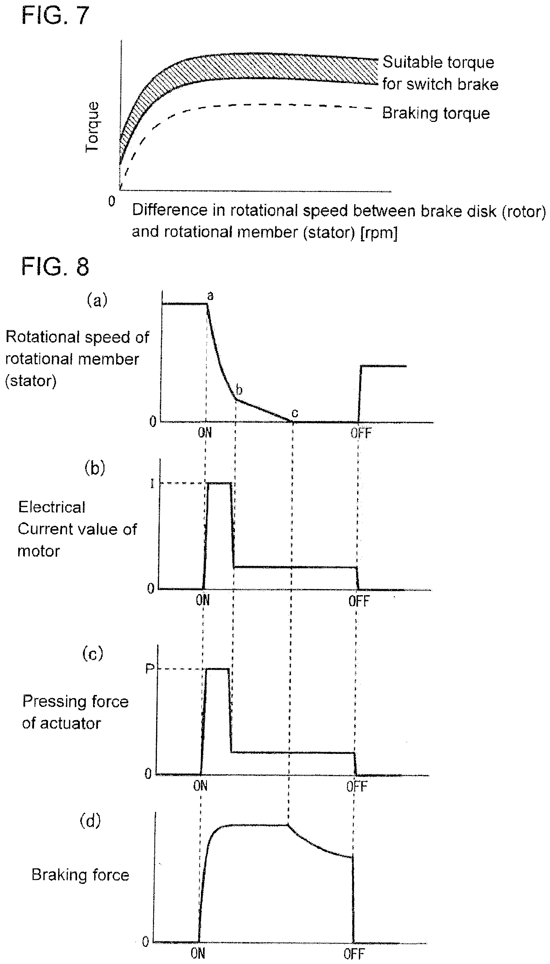

FIG. 7 is a schematic diagram showing a relationship between torque and the difference in rotational speed between the brake disk and the rotational member, in order to ascertain the suitable pressing force of the actuator. The difference in rotational speed between the brake disk (rotor) and the rotational member (stator) shown in the same figure also corresponds to the rotational speed of the rotational member at the time that the braking is switched. As shown by the dashed line in the same figure, the braking torque based on the braking force generated at the brake disk increases according as the difference in relative rotational speed between the brake disk and the rotational member becomes larger, and the braking torque saturates and becomes substantially constant when the difference in rotational speed thereof becomes larger to a certain degree.

When the rotational member is made to stop, at least a torque exceeding the braking torque is required for the switch brake torque generated by the pressing force of the actuator, and furthermore, a torque to which the inertia torque based on the inertia force occurring due to the rotational speed of the rotational member at the time that the braking is switched is added is required. However, if the switch brake torque is too large, an excessive shock will occur due to the stopping of the rotational member.

Based on these aspects, the switch brake torque is preferably set within the range of 120% to 150% based on the braking torque occurring in accordance with the rotational speed of the rotational member at the time that the braking is switched, as shown by the hatched area in FIG. 7. Therefore, the suitable pressing force of the actuator causes a switch brake torque within the range to be generated, and the electrical current value applied to the electric motor is set according to the pressing force.

### (2) In Case Actuator does not have Sustaining Function

FIG. 8 is a time chart illustrating an example of a mitigation control measure against shock generated by the switch brake in case the actuator does not have a sustaining function, with (a) of the same figure showing the rotational speed of the rotational member (stator), (b) of the same figure showing the value of the electrical current applied to the electric motor, (c) of the same figure showing the pressing force of the actuator, and (d) of the same figure showing the braking force.

Control measures in case the actuator does not have a sustaining function differ in the followings points from the case where the actuator has the sustaining function as described above.

Electrical current at a predetermined electrical current value I is applied to the electric motor at the point "a" shown in FIG. 8(a), and then when a predetermined time elapses as shown by the point "b" in the same figure, the electrical current value applied to the electric motor is reduced, as shown in FIG. 8(b). The pressing force of the actuator thereby declines as shown in FIG. 8(c), since the actuator does not have the sustaining function. As a result of this, the change in the rate of rotational decline of the rotational member becomes relaxed as shown in FIG. 8(a), and the rotational member stops at the point "c" in the same figure.

Thus, the rotational speed of the rotational member rapidly declines, and then the change in the rate of rotational decline of the rotational member becomes relaxed immediately before the rotational member stops; therefore, switching can be performed responsively, and shock occurring as a result of stopping of the rotational member can be mitigated. In case of the control shown in FIG. 8, the applied electrical current value I when the braking is switched can be set to be larger than the case of the control shown in FIG. 7.

Instead of the elapsed time, at the time that the rotational speed of the rotational member is reduced to a predetermined rotational speed, the reduction of the electrical current value, which is applied to the electric motor, at the point "b" shown in FIG. 8(a) may be performed.

In case the actuator does not have a sustaining function, and when the application of electrical current to the electric motor stops as shown in FIG. 8(b), the pressing force of the actuator is released and the non-braking state is immediately entered; therefore, the application of electrical current to the electrical motor continues during braking, even after the rotational member has stopped.

### INDUSTRIAL APPLICABILITY

According to the eddy current speed reducer of the present invention, a size reduction in the device can be realized, and further, it can be easily installed even in a small- to mid-size vehicle that is not specially equipped with a compressed air tank or the like. Therefore, the eddy current speed reducer of the present invention is very useful as an auxiliary brake of any vehicle.

### REFERENCE SIGNS LIST

1: Brake disk, 2: Radiator fin, 3: Rotational member,
4: Magnetic retention disk, 5: Permanent magnet, 6: Switch brake disk,
7: Switch brake caliper, 8a, 8b: Brake pads, 9: Electric linear actuator,
10: Electric motor, 11: Rotation shaft, 12: Connecting shaft,
13: Sleeve, 14: Nut, 15a, 15b: Bearings, 16a, 16b: Seal members,
17: Bracket, 18: Bearing, 19a, 19b: Seal members, 21: Casing,
22: Outer race member, 23: Spiral convex zone, 24: Rotor shaft,
25: Planetary roller, 26: Spiral groove system, 27: Carrier member,
28: Support shaft, 29: Needle bearing, 30: Thrust ball bearing,
31: Linear drive member, 32: Thrust ball bearing, 33: Boot,
34: Membranous seal, 41: Arm portion, 42: Cross member,
43: Shock mount bushing, 44: Metal washer, 45: Bolt,
46: Nut, 51: Arm portion, 52: Stay, 53: Projecting piece,
54: Shock absorber, 55: Coil spring, 56: Bolt, 57: Nut

## Claims

1. An eddy current speed reducer, **characterized by** comprising:
a brake disk (1) that is fixed to a rotation shaft (11) of a vehicle;
permanent magnets (5) that are disposed not only oppositely relative to a principal surface of the brake disk (1) but also circumferentially in such a manner that each magnet (5) is magnetized in reverse polarity to adjacent ones;
a rotational member (3) that retains the permanent magnets (5), has a switch brake disk (6), and is rotatably supported by the rotation shaft (11);
a switch brake caliper (7) that has brake pads (8a, 8b) sandwiching the switch brake disk (6) therebetween, and is fixed to an irrotational portion of the vehicle; and
an electric linear actuator (9) that causes the brake pads (8a, 8b) to be linearly driven by converting rotational motion of an electric motor (10) into linear motion,
wherein the switch brake caliper (7) is fixed to the irrotational portion of the vehicle via a buffering material, and
wherein the electric linear actuator (9) is operable electrically to switch between braking and non-braking and to drive the switch brake caliper (7).

2. The eddy current speed reducer according to claim 1, **characterized in that**:
the electric linear actuator (9) is configured such that a plurality of planetary rollers (25) are interposed between an outer circumferential surface of a rotor shaft (24), which rotates integrally with a main shaft of the electric motor (10), and an inner circumferential surface of an outer race member (22) that concentrically surrounds the rotor shaft (24), and each of the planetary rollers (25) revolves while rotating around the rotor shaft (24) as a result of the rotation of the rotor shaft (24);
while allowing a spiral convex zone (23) to be disposed on the outer circumferential surface of the rotor shaft (24), provided on an outer circumferential surface of each of the planetary rollers (25) is a circumferential groove system, which has the same pitch as the spiral convex zone (23) and meshes therewith; and
each of the planetary rollers (25) revolves while rotating around the rotor shaft (24) as a result of the rotation of the rotor shaft (24) and simultaneously moves in an axial direction so that the brake pads (8a, 8b) are linearly driven as a result of the axial movement of each of the planetary rollers (25).

3. The eddy current speed reducer according to claim 1, **characterized in that**:
the electric linear actuator (9) is configured such that a plurality of planetary rollers (25) are interposed between an outer circumferential surface of a rotor shaft (24), which rotates integrally with a main shaft of the electric motor (10), and an inner circumferential surface of an outer race member (22) that concentrically surrounds the rotor shaft (24), and each of the planetary rollers (25) revolves while rotating around the rotor shaft (24) as a result of the rotation of the rotor shaft (24);
while allowing a spiral convex zone (23) to be disposed on the outer circumferential surface of the rotor shaft (24), provided on an outer circumferential surface of each of the planetary rollers (25) is a spiral groove system (26), which has the same pitch as the spiral convex zone (23) and a lead angle different from that of the spiral convex zone (23) and meshes with the spiral convex zone (23); and
each of the planetary rollers (25) revolves while rotating around the rotor shaft (24) as a result of the rotation of the rotor shaft (24) and simultaneously moves in an axial direction so that the brake pads (8a, 8b) are linearly driven as a result of the axial movement of each of the planetary rollers (25).

4. The eddy current speed reducer according to claim 1, **characterized in that**:
the electric linear actuator (9) is configured such that a plurality of planetary rollers (25) are interposed between an outer circumferential surface of a rotor shaft (24), which rotates integrally with a main shaft of the electric motor (10), and an inner circumferential surface of an outer race member (22) that concentrically surrounds the rotor shaft (24), and each of the planetary rollers (25) revolves while rotating around the rotor shaft (24) as a result of the rotation of the rotor shaft (24);
while allowing a spiral convex zone (23) to be disposed on the inner circumferential surface of the outer race member (22), provided on an outer circumferential surface of each of the planetary rollers (25) is a circumferential groove system, which has the same pitch as the spiral convex zone (23) and meshes therewith; and
each of the planetary rollers (25) revolves while rotating around the rotor shaft (24) as a result of the rotation of the rotor shaft (24) and simultaneously moves in an axial direction so that the brake pads (8a, 8b) are linearly driven as a result of the axial movement of each of the planetary rollers (25).

5. The eddy current speed reducer according to claim 1, **characterized in that**:
the electric linear actuator (9) is configured such that a plurality of planetary rollers (25) are interposed between an outer circumferential surface of a rotor shaft (24), which rotates integrally with a main shaft of the electric motor (10), and an inner circumferential surface of an outer race member (22) that concentrically surrounds the rotor shaft (24), and each of the planetary rollers (25) revolves while rotating around the rotor shaft (24) as a result of the rotation of the rotor shaft (24);
while allowing a spiral convex zone (23) to be disposed on the inner circumferential surface of the outer race member (22), provided on an outer circumferential surface of each of the planetary rollers (25) is a spiral groove system (26), which has the same pitch as the spiral convex zone (23) and a lead angle different from that of the spiral convex zone (23) and meshes with the spiral convex zone (23); and
each of the planetary rollers (25) revolves while rotating around the rotor shaft (24) as a result of the rotation of the rotor shaft (24) and simultaneously moves in an axial direction so that the brake pads (8a, 8b) are linearly driven as a result of the axial movement of each of the planetary rollers (25).

## Patentansprüche

1. Wirbelstromgeschwindigkeitsreduzierer (1), **gekennzeichnet durch** umfassend:
eine Bremsscheibe (1), die an einem Rotationsschaft (11) eines Fahrzeugs fixiert ist;
Permanentmagnete (5) die nicht relativ zu nur einer Hauptoberfläche der Bremsscheibe (1) gegenüber angeordnet sind, sondern auch umfänglich auf solch eine Art und Weise, dass jeder Magnet (5) in entgegengesetzter Polarität zu benachbarten magnetisiert ist;
ein Drehteil (3), dass die Permanentmagnete (5) hält, eine Schaltbremsscheibe (6) aufweist und von dem Rotationsschaft (11) drehbar gehalten wird;
einen Schaltbremssattel (7), der Bremsbeläge (8a, 8b) aufweist, die die Schaltbremsscheibe (6) zwischen ihnen aufnehmen, und der an einem nicht drehbaren Teil des Fahrzeugs fixiert es; und
einen elektrischen Linearaktuator (9), der die Bremsbeläge (8a, 8b) veranlasst, durch Wandeln einer Drehbewegung eines elektrischen Motors (10) in eine Linearbewegung, linear angetrieben zu werden,
wobei der Schaltbremssattel (7) an dem nicht drehbaren Teil des Fahrzeugs über ein Puffermaterial fixiert ist, und
wobei der elektrische Linearaktuator (9) elektrisch betreibbar ist, um zwischen Bremsen und Nicht-Bremsen zu schalten und um den Schaltbremssattel (7) anzutreiben.

2. Wirbelstromgeschwindigkeitsreduzierer (1) nach Anspruch 1, **dadurch gekennzeichnet, dass**:
der elektrische Linearaktuator (9) konfiguriert ist, so dass eine Mehrzahl von Planetenrollen (25) zwischen einer äußeren Umfangsfläche eines Rotorschafts (24), der sich mit einem Hauptschaft des elektrischen Motors (10) integral dreht, und einer inneren Umfangsfläche eines äußeren Laufteils (22), das den Rotorschaft (24) konzentrisch umgibt, angeordnet sind, und jede der Planetenrollen (25) sich dreht während sie um den Rotorschaft (24) rotiert, als ein Ergebnis der Rotation des Rotorschafts (24);
während es einer spiralartigen, konvexen Zone (23) ermöglicht wird, auf der äußeren Umfangsfläche des Rotorschaft (24) angeordnet zu sein, ist auf einer äußeren Umfangsfläche von jeder der Planetenrollen (25) ein umfängliches Rillensystem vorgesehen, dass das gleiche Abstandsmaß wie die spiralartige, konvexe Zone (23) aufweist und mit dieser ineinander greift; und
jede der Planetenrollen (25) sich dreht, während sie um den Rotorschaft (24) rotiert, als ein Ergebnis der Rotation des Rotorschafts (24), und sich gleichzeitig in eine axiale Richtung bewegt, so dass die Bremsbeläge (8a, 8b) linear angetrieben werden, als ein Ergebnis der axialen Bewegung von jeder der Planetenrollen (25).

3. Wirbelstromgeschwindigkeitsreduzierer (1) nach Anspruch 1, **dadurch gekennzeichnet, dass**:
der elektrische Linearaktuator (9) konfiguriert ist, so dass eine Mehrzahl von Planetenrollen (25) zwischen einer äußeren Umfangsfläche eines Rotorschafts (24), der sich mit einem Hauptschaft des elektrischen Motors (10) integral dreht, und einer inneren Umfangsfläche eines äußeren Laufteils (22), das den Rotorschaft (24) konzentrisch umgibt, angeordnet sind, und jede der Planetenrollen (25) sich dreht während sie um den Rotorschaft (24) rotiert, als ein Ergebnis der Rotation des Rotorschafts (24);
während es einer spiralartigen, konvexen Zone (23) ermöglicht wird, auf der äußeren Umfangsfläche des Rotorschaft (24) angeordnet zu sein, ist auf einer äußeren Umfangsfläche von jedem der Planetenrollen (25) ein spiralartiges Rillensystem (26) vorgesehen, das das gleiche Abstandsmaß wie die spiralartige, konvexe Zone (23) und einen unterschiedlichen Steigungswinkel wie die spiralartige, konvexe Zone (23) aufweist und mit der spiralartigen, konvexen Zone (23) ineinander greift; und
jede der Planetenrollen (25) sich dreht, während sie um den Rotorschaft (24) rotiert, als ein Ergebnis der Rotation des Rotorschafts (24), und sich gleichzeitig in eine axiale Richtung bewegt, so dass die Bremsbeläge (8a, 8b) linear angetrieben werden, als ein Ergebnis der axialen Bewegung von jeder der Planetenrollen (25).

4. Wirbelstromgeschwindigkeitsreduzierer (1) nach Anspruch 1, **dadurch gekennzeichnet, dass**:
der elektrische Linearaktuator (9) konfiguriert ist, so dass eine Mehrzahl von Planetenrollen (25) zwischen einer äußeren Umfangsfläche eines Rotorschafts (24), der sich mit einem Hauptschaft des elektrischen Motors (10) integral dreht, und einer inneren Umfangsfläche eines äußeren Laufteils (22), das den Rotorschaft (24) konzentrisch umgibt, angeordnet sind, und jede der Planetenrollen (25) sich dreht während sie um den Rotorschaft (24) rotiert, als ein Ergebnis der Rotation des Rotorschafts (24);
während es einer spiralartigen, konvexen Zone (23) ermöglicht wird, auf der inneren Umfangsfläche des äußeren Laufteils (22) angeordnet zu sein, ist auf einer äußeren Umfangsfläche von jedem der Planetenrollen (25) ein umfängliches Rillensystem vorgesehen, das das gleiche Abstandsmaß wie die spiralartige, konvexe Zone (23) aufweist und mit dieser ineinander greift; und
jede der Planetenrollen (25) sich dreht, während sie um den Rotorschaft (24) rotiert, als ein Ergebnis der Rotation des Rotorschafts (24), und sich gleichzeitig in eine axiale Richtung bewegt, so dass die Bremsbeläge (8a, 8b) linear angetrieben werden, als ein Ergebnis der axialen Bewegung von jeder der Planetenrollen (25).

5. Wirbelstromgeschwindigkeitsreduzierer (1) nach Anspruch 1, **dadurch gekennzeichnet, dass**:
der elektrische Linearaktuator (9) konfiguriert ist, so dass eine Mehrzahl von Planetenrollen (25) zwischen einer äußeren Umfangsfläche eines Rotorschafts (24), der sich mit einem Hauptschaft des elektrischen Motors (10) integral dreht, und einer inneren Umfangsfläche eines äußeren Laufteils (22), das den Rotorschaft (24) konzentrisch umgibt, angeordnet sind, und jede der Planetenrollen (25) sich dreht während sie um den Rotorschaft (24) rotiert, als ein Ergebnis der Rotation des Rotorschafts (24);
während es einer spiralartigen, konvexen Zone (23) ermöglicht wird, auf der inneren Umfangsfläche des äußeren Laufteils (22) angeordnet zu sein, ist auf einer äußeren Umfangsfläche von jedem der Planetenrollen (25) ein spiralartiges Rillensystem (26) vorgesehen, das das gleiche Abstandsmaß wie die spiralartige, konvexe Zone (23) und einen anderen Steigungswinkel als die spiralartige, konvexe Zone (23) aufweist mit der spiralartige, konvexe Zone (23) ineinander greift; und
jede der Planetenrollen (25) sich dreht, während sie um den Rotorschaft (24) rotiert, als ein Ergebnis der Rotation des Rotorschafts (24), und sich gleichzeitig in eine axiale Richtung bewegt, so dass die Bremsbeläge (8a, 8b) linear angetrieben werden, als ein Ergebnis der axialen Bewegung von jeder der Planetenrollen (25).

## Revendications

1. Réducteur de vitesse à courant de Foucault, **caractérisé en ce qu'**il comprend :
un disque de frein (1) qui est relié à un arbre rotatif (11) d'un véhicule ;
des aimants permanents (5) disposés non seulement de manière opposée par rapport à une surface principale du disque de frein (1) mais également de manière circonférentielle de sorte que chaque aimant (5) est magnétisé en polarité inverse par rapport aux aimants adjacents ;
un membre rotatif (3) qui maintient les aimants permanents (5), ayant un commutateur de disque de frein (6), et est supporté de manière rotative par l'arbre de rotation (11),
un commutateur d'étrier de frein (7) ayant des plaquettes de frein (8a,8b) prenant en sandwich le commutateur de disque de frein (6), et étant relié à une portion non-rotative du véhicule, et
un actionneur électrique linéaire (9) entraine les plaquettes de frein (8a,8b) linéairement en convertissant le mouvement rotationnel du moteur électrique (10) en un mouvement linéaire,
dans lequel le commutateur d'étrier de frein (7) est relié à une portion non-rotative du véhicule par l'intermédiaire d'un matériau tampon, et
dans lequel l'actionneur électrique linéaire (9) est électriquement actionnable pour commuter entre freinage et non-freinage et pour entrainer le commutateur d'étrier de frein (7).

2. Réducteur selon la revendication 1, **caractérisé en ce que** :
l'actionneur électrique linéaire (9) est configuré de sorte qu'une pluralité de rouleaux satellites (25) sont interposés entre une surface circonférentielle externe d'un arbre de rotor (24), qui tourne intégralement avec un arbre principal du moteur électrique (10), et une surface circonférentielle interne d'un élément de course externe (22) qui entoure concentriquement l'arbre de rotor (24), et chacun des rouleaux satellites (25) gravite tout en tournant autour de l'arbre de rotor (24) du fait de la rotation de l'arbre de rotor (24) ;
tout en permettant à une zone convexe en spirale (23) d'être disposée sur la surface circonférentielle externe de l'arbre de rotor (24), un système de rainure circonférentielle étant disposé sur une surface circonférentielle externe de chacun des rouleaux satellites (25), ayant le même pas que la zone convexe en spirale (23) et s'entremêlant avec celle-ci, et
chacun des rouleaux satellites (25) gravite tout en tournant autour de l'arbre de rotor (24) du fait de la rotation de l'arbre de rotor (24) et se déplace simultanément dans une direction axiale de manière à ce que les plaquettes de frein (8a,8b) sont entrainées linéairement du fait du mouvement de chacun des rouleaux satellites (25).

3. Réducteur selon la revendication 1, **caractérisé en ce que** :
l'actionneur électrique linéaire (9) est configuré de manière qu'une pluralité de rouleaux satellites (25) sont interposés entre une surface circonférentielle externe d'un arbre de rotor (24), qui tourne intégralement avec un arbre principal du moteur électrique (10), et une surface circonférentielle interne d'un élément de course externe (22) qui entoure concentriquement l'arbre de rotor (24), et chacun des rouleaux satellites (25) gravite tout en tournant autour de l'arbre de rotor (24) du fait de la rotation de l'arbre de rotor (24) ;
tout en permettant à une zone convexe en spirale (23) d'être disposée sur la surface circonférentielle externe de l'arbre de rotor (24), un système de rainure spirale (26) étant disposé sur une surface circonférentielle externe de chacun des rouleaux satellites (25), ayant le même pas que la zone convexe en spirale (23) et un angle d'inclinaison différent de celui de la zone convexe en spirale (23) et s'entremêle avec la zone convexe en spirale (23) ; et
chacun des rouleaux satellites (25) gravite tout en tournant autour de l'arbre de rotor (24) du fait de la rotation de l'arbre de rotor (24) et se déplace simultanément dans une direction axiale de manière à ce que les plaquettes de frein (8a,8b) sont entrainées linéairement du fait du mouvement de chacun des rouleaux satellites (25).

4. Réducteur selon la revendication 1, **caractérisé en ce que** :
l'actionneur électrique linéaire (9) est configuré de manière qu'une pluralité de rouleaux satellites (25) sont interposés entre une surface circonférentielle externe d'un arbre de rotor (24), qui tourne intégralement avec un arbre principal du moteur électrique (10), et une surface circonférentielle interne d'un élément de course externe (22) qui entoure concentriquement l'arbre de rotor (24), et chacun des rouleaux satellites (25) gravite tout en tournant autour de l'arbre de rotor (24) du fait de la rotation de l'arbre de rotor (24) ;
tout en permettant à une zone convexe en spirale (23) d'être disposée sur la surface circonférentielle interne de l'élément de course externe (22), un système de rainure circonférentielle étant disposé sur une surface circonférentielle externe de chacun des rouleaux satellites (25), ayant le même pas que la zone convexe en spirale (23) et s'entremêlant avec celle-ci, et
chacun des rouleaux satellites (25) gravite tout en tournant autour de l'arbre de rotor (24) du fait de la rotation de l'arbre de rotor (24) et se déplace simultanément dans une direction axiale de manière à ce que les plaquettes de frein (8a,8b) sont entrainées linéairement du fait du mouvement de chacun des rouleaux satellites (25).

5. Réducteur selon la revendication 1, **caractérisé en ce que** :
l'actionneur électrique linéaire (9) est configuré de manière qu'une pluralité de rouleaux satellites (25) sont interposés entre une surface circonférentielle externe d'un arbre de rotor (24), qui tourne intégralement avec un arbre principal du moteur électrique (10), et une surface circonférentielle interne d'un élément de course externe (22) qui entoure concentriquement l'arbre de rotor (24), et chacun des rouleaux satellites (25) gravite tout en tournant autour de l'arbre de rotor (24) du fait de la rotation de l'arbre de rotor (24) ;
tout en permettant à une zone convexe en spirale (23) d'être disposée sur la surface circonférentielle interne de l'élément de course externe (22), un système de rainure spirale (26) étant disposé sur une surface circonférentielle externe de chacun des rouleaux satellites (25), ayant le même pas que la zone convexe en spirale (23) et un angle d'inclinaison différent de celui de la zone convexe en spirale (23) et s'entremêle avec la zone convexe en spirale (23) ; et
chacun des rouleaux satellites (25) gravite tout en tournant autour de l'arbre de rotor (24) du fait de la rotation de l'arbre de rotor (24) et se déplace simultanément dans une direction axiale de manière à ce que les plaquettes de frein (8a,8b) sont entrainées linéairement du fait du mouvement de chacun des rouleaux satellites (25).
